## Europäisches Patentamt

## European Patent Office

## Office européen des brevets

(11) Numéro de publication: **0 223 675**
**B1**

## FASCICULE DE BREVET EUROPEEN

(45) Date de publication du fascicule du brevet: **05.09.90**

(51) Int. Cl.⁵: **B 23 K 9/06**

(21) Numéro de dépôt: **86402357.7**

(22) Date de dépôt: **22.10.86**

(54) Torche de soudage avec dispositif d'amorcage d'arc.

(30) Priorité: **25.10.85 FR 8515863**

(43) Date de publication de la demande:
**27.05.87 Bulletin 87/22**

(45) Mention de la délivrance du brevet:
**05.09.90 Bulletin 90/36**

(84) Etats contractants désignés:
**DE ES FR GB IT NL**

(56) Documents cités:
**DE-A-2 709 007**
**FR-A-2 052 152**
**GB-A-1 146 283**
**GB-A-2 061 035**
**GB-A-2 115 993**

(73) Titulaire: **LA SOUDURE AUTOGENE FRANCAISE**
**75, Quai d'Orsay**
**F-75007 Paris (FR)**
(84) **DE FR GB NL**

(73) Titulaire: **L'AIR LIQUIDE, SOCIETE ANONYME**
**POUR L'ETUDE ET L'EXPLOITATION DES**
**PROCEDES GEORGES CLAUDE**
**75, Quai d'Orsay**
**F-75321 Paris Cédex 07 (FR)**
(84) **ES IT**

(72) Inventeur: **Hays, Jean-François**
**Résidence Val Eglantine**
**F-78420 Carrieres-sur-Seine (FR)**
Inventeur: **Legrand, Pierre**
**5, place Adenauer**
**F-95300 Pontoise (FR)**
Inventeur: **Verna, Eric**
**2, Maradas Mauves**
**F-95000 Cergy (FR)**
Inventeur: **Delzenne, Michel**
**222, rue du Général Leclerc**
**F-95130 Franconville (FR)**
Inventeur: **Reynaud, Bernard**
**386, Parc de Cassan**
**F-95290 l'Isle Adam (FR)**

Courier Press, Leamington Spa, England.

# EP  0 223 675  B1

(72) Inventeur: **Gaillard, Pierre**
**49 bis, rue des Peupliers**
**F-94500 Champigny-sur-Marne (FR)**

(74) Mandataire: **Sadones Laurent, Renée et al**
**L'AIR LIQUIDE 75, quai d'Orsay**
**F-75321 Paris Cédex 07 (FR)**

**Description**

L'invention concerne un dispositif de soudage ou coupage électrique, du genre comportant un corps de torche avec une électrode réfractaire servant au soudage ou au coupage et un conduit annulaire coaxial à ladite électrode pour un gaz, ladite électrode et ledit conduit étant raccordés à des moyens d'alimentation par un faisceau d'alimentation incorporant:

un câble électrique d'amenée du courant de soudage;

un conduit pour le gaz;

le cas échéant des conduits d'alimentation et de retour pour un fluide de refroidissement et des conducteurs de commande, ladite torche comportant également un dispositif d'allumage d'arc incorporant un éclateur alimenté par une source d'impulsions d'allumage d'arc, ledit éclateur, composé d'un ensemble de deux électrodes d'éclateur, étant placé en regard de l'électrode de soudage ou coupage et raccordé à la source d'impulsions par deux conducteurs.

Dans le brevet DE—A—2.709.007, la disposition où l'éclateur est placé en regard de l'extrémité de l'électrode d'arc permet une ionisation directe de l'espace autour de l'électrode, donc l'allumage subséquent, mais elle présente l'inconvénient de devoir générer une onde haute tension entre l'électrode de soudage et la pièce à souder ou couper, ce qui pose des problèmes au regard du transfert des ondes haute-tension à fréquence élevée.

L'invention telle que définie dans l'unique revendication a pour objet de supprimer ces inconvénients en prévoyant un dispositif de soudage où l'éclateur est disposé dans un logement qui lui est propre, hors de l'espace à ioniser au niveau de l'électrode de soudage ou coupage, et ouvert en direction de l'extrémité de celle-ci et en ce que l'un desdits conducteurs reliant l'éclateur à la source d'impulsion est commun sur au moins une partie de sa longueur avec le câble d'amenée du courant de soudage.

La décharge intervient donc uniquement dans l'éclateur sans transiter dans l'espace à ioniser au niveau de l'électrode de soudage ou coupage.

Les caractéristiques et avantages de l'invention ressortiront d'ailleurs de la description qui suit, à titre d'exemple, en référence aux dessins annexés dans lesquels:

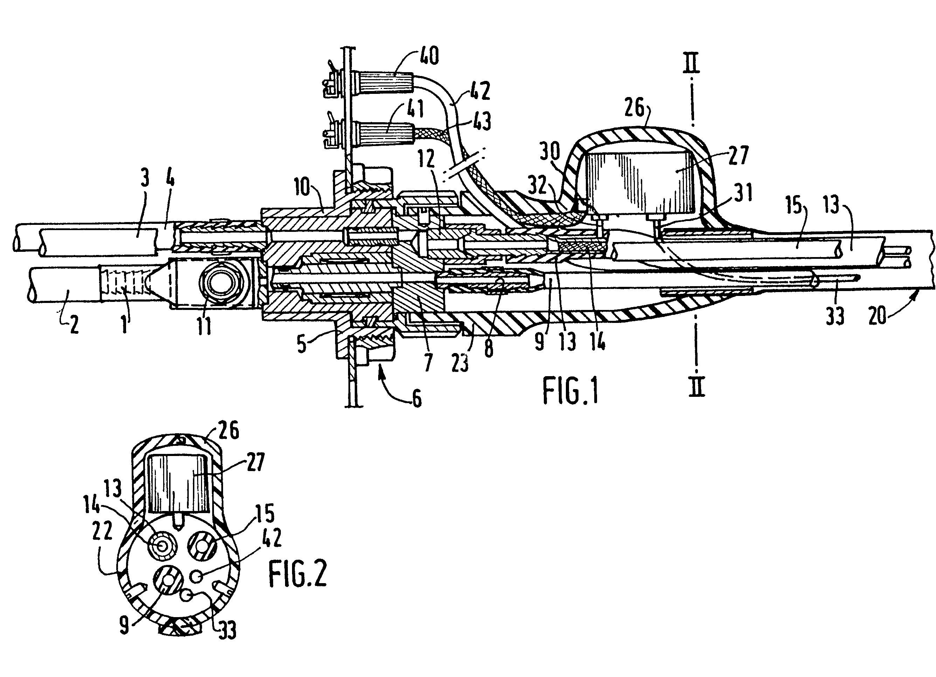

la figure 1 est une vue en coupe axiale d'un raccord rapide équipé d'un allumeur électronique selon l'invention;

la figure 2 est une vue en coupe transversale selon la ligne II—II de la figure 1;

la figure 3 est une vue en coupe axiale d'une torche de soudage selon l'invention et d'une partie de son faisceau destiné à être raccordé au connecteur rapide décrit à la figure 1.

En se référant aux dessins, un dispositif d'alimentation d'une torche est équipée d'un connecteur rapide qui comporte, du côté relié aux sources fixes, un câble d'amenée de courant 1, un conduit pour un gaz de protection 2, un conduit pour une amenée d'eau de refroidissement 3 et un conduit pour une évacuation d'eau de refroidissement 4, qui aboutissent, côté aval, à une embase 5 d'un connecteur rapide 6, dont on décrit maintenant rapidement la constitution;

il comporte une traversée 7 pour le gaz raccordé à l'aval à un embout 8 d'un conduit de gaz 9;

il est formé essentiellement de pièces métalliques enrobées d'une enveloppe isolante 10 et le câble de courant de soudage 1 se raccorde à une borne 11, électriquement liée à ces pièces conductrices, qui servent également de raccord pour l'arrivée et le retour de l'eau de refroidissement. On a représenté en coupe au dessin le raccord de retour d'eau de refroidissement, qui comporte une jonction 12 au conduit 4, sur laquelle se fixe de façon étanche un conducteur de retour d'eau de refroidissement 13, incorporant un câble électrique 14 raccordé électriquement aux pièces conductrices, de sorte que le courant de soudage conduit par le câble 1 transite au travers des pièces conductrices jusqu'au câble 14.

Le raccord d'arrivée d'eau pour une conduite 15 est du même type, mais n'incorpore aucun câble électrique.

Les divers conduits et conducteur 9, 13 et 14, 15 sont groupés en un faisceau 20 à enveloppe isolante et dans la partie terminale amont 22 est prévue une enveloppe plastique rigide 23 formée de deux doubles coquilles 24—25 ayant une proéminence 26 de façon à incorporer un allumeur électronique 27, du genre rappelé précédemment. Cet allumeur électronique 27 présente deux bornes de sortie haute tension 30 et 31, la borne 30 étant électriquement raccordée via un conducteur 32 aux pièces conductrices du connecteur rapide, donc au câble de courant de soudage 14, tandis que la borne haute tension 31 est raccordée à un conducteur haute tension 33 engagé dans le faisceau de conducteurs 20.

L'embase 5 du connecteur rapide, qui peut être la paroi du générateur de soudage, porte en outre deux connecteurs 40 et 41. Le connecteur 40 servant à raccorder un ou plusieurs conducteurs basse tension de commande 42, tandis que le connecteur rapide 41 sert au raccordement de deux fils électriques 43 raccordés aux bornes basse tension de l'allumeur électronique 27.

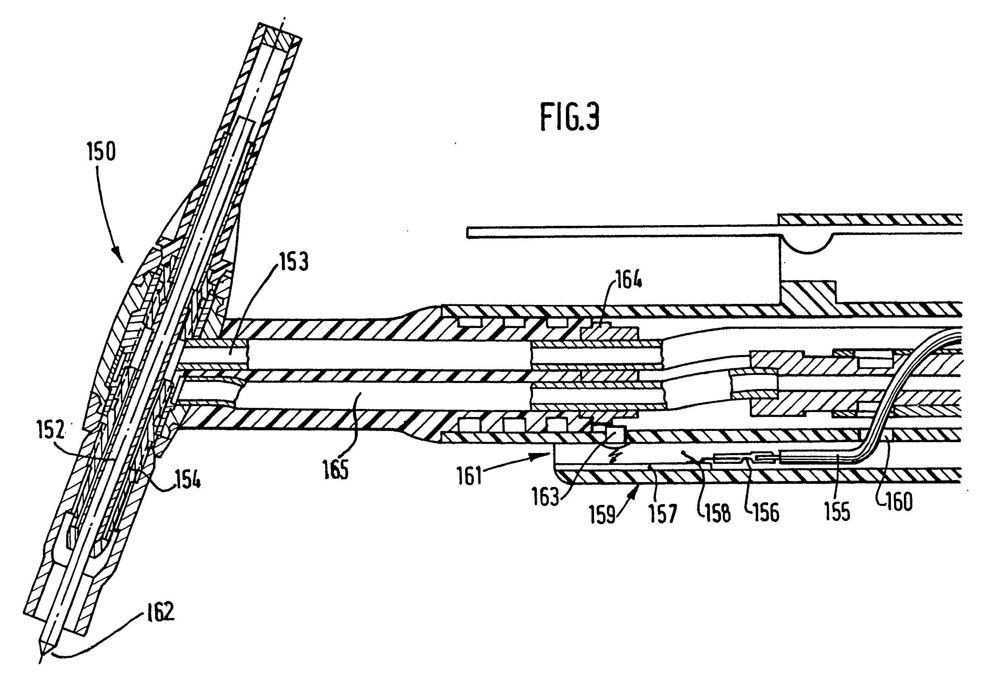

Le faisceau de conducteur 20, qui présente une certaine flexibilité (sur quelques mètres, au maximum huit mètres), s'étend jusqu'à la torche de soudage représentée à la figure 3 que l'on décrit maintenant.

Une torche 150 présente une électrode 152 raccordée électriquement à un conducteur tubulaire 153 pour le gaz de protection s'écoulant dans l'espace interstitiel 154. Un conducteur haute tension bien isolé mais non blindé 155 est raccordé par une cosse 156 à une pièce métallique 157, le tout placé dans un logement longitudinal 158 faisant partie d'une poignée de torche 159, présentant une ouverture latérale amont 160 formant traversée d'arrivée du câble haute tension et une ouverture aval 161, qui se présente en regard de l'extrémité d'électrode 162. Directement en regard de la pièce métallique 157, formant électrode d'éclateur, se présente un doigt 163 à distance d'éclateur de la pièce 157 et qui est électriquement raccordé via un manchon conducteur 164 au tube de retour d'eau 165 formant lui-même conducteur d'alimentation électrique du courant de soudage pour l'électrode 152.

A l'expérience on constate un excellent fonctionnement du dispositif qui vient d'être décrit. De façon très surprenante, et sans qu'on puisse actuellement en donner une explication satisfaisante, il s'avère qu'il est préférable pour obtenir un allumage extrêmement efficace, non seulement de prévoir une ouverture 161 au niveau de l'éclateur 157—163, mais également que cette ouverture 161 se présente pratiquement en regard de la zone d'allumage d'arc, c'est-à-dire en regard de l'extrémité d'électrode 162.

On a constaté au cours des essais que la construction de l'éclateur et son positionnement influaient énormément sur l'efficacité du système. En effet:

l'efficacité diminue lorsque la distance entre de l'éclature à l'espace à ioniser devient trop importe;

toute interposition d'un objet (conducteur ou isolant) entre l'éclateur et l'espace à ioniser provoque une réduction notable de l'étincelle ionisante;

un éclateur orthogonal à la direction de la poignée comme représenté à la figure 3 donne de biens meilleurs résultats qu'un éclateur agencé parallèlement au manche.

### Revendication

Torche de soudage ou coupage électrique, du genre comportant un corps de torche (150) avec une électrode (152) réfractaire servant au soudage ou au coupage et un conduit annulaire (154) coaxial à ladite électrode pour un gaz, ladite électrode et ledit conduit étant raccordés à des moyens d'alimentation par un faisceau d'alimentation (20) incorporant:

un câble électrique d'amenée du courant de soudage (165, 14);

un conduit pour le gaz (153);

le cas échéant des conduits d'alimentation (15) et de retour (13) pour un fluide de refroidissement et des conducteurs de commande, ladite torche comportant également un dispositif d'allumage d'arc incorporant un éclateur alimenté par une source d'impulsions d'allumage d'arc (27), ledit éclateur, composé d'un ensemble de deux électrodes d'éclateur (157, 163), étant placé en regard de l'électrode de soudage ou coupage (152) et raccordé à la source d'impulsions (27) par deux conducteurs (164, 165, 14, 32 et 156, 155, 33, 31), caractérisé en ce que ledit éclateur est disposé dans un logement (158) qui lui est propre, hors de l'espace à ioniser au niveau de l'électrode de soudage ou coupage (152), et ouvert (161) en direction de l'extrémité (162) de celle-ci et en ce que l'un desdits conducteurs (164, 165, 14, 32) reliant l'éclateur à la source d'impulsions est commun sur au moins une partie de sa longueur avec le câble (165, 14) d'amenée du courant de soudage.

### Patentanspruch

Brenner zum elektrischen Schweißen oder Schneiden mit einem Brennerkörper (150) mit einer feuerfesten Elektrode (152), die dem Schweißen oder Schneiden dient, und einer ringförmigen Leitung (154) für ein Gas, die zu der Elektrode koaxial ist, wobei die Elektrode und die Leitung mit Versorgungsmitteln durch ein Versorgungsbündel (20) verbunden ist, mit:

einem elektrischen Versorgungskabel für Schweißstrom (165, 14);

einer Leitung für das Gas (153);

gegebenenfalls Versorgungsleitungen (15) und Rücklaufleitungen (13) für ein Kühlfluid und Steuerleiter,

wobei der Brenner auch eine Vorrichtung zum Zünden des Lichtbogens aufweist mit einem Entlader, der durch eine Quelle (27) für Lichtbogenzündimpulse versorgt wird, wobei der Entlader, der aus einer Gesamtheit von zwei Entladerelektroden (157, 163) zusammengesetzt ist, gegenüber der Schweiß- oder Schneidelektrode (152) angeordnet ist mit der Impulsquelle (27) durch zwei Leiter (164, 165, 14, 32 und 156, 155, 33, 31) verbunden ist, dadurch gekennzeichnet, daß der Entlader in einem für ihn geeigneten Sitz (158) angeordnet ist, außerhalb des Ionisierraumes an der Schweiß- oder Schneidelektrode (152), und offen ist (161) in Richtung des Endes (162) derselben und daß einer der Leiter (164, 165, 14, 32), welche den Entlader mit der Impulsquelle verbinden, auf wenigstens einem Teil seiner Länge mit dem Zuführkabel (165, 14) für den Schweißstrom gemeinschaftlich ist.

### Claim

An electric welding or cutting torch, of the type comprising a refractory electrode (152) for the welding or cutting and an annular conduit (154) for a gas, coaxial with the said electrode, the said electrode and the said conduit being connected to supply means *via* a supply bundle (20) incorporating:

an electric cable (165, 14) feeding the welding current;

a conduit (153) for the gas;

if required, supply (15) and return (13) conduits for a cooling fluid and control leads, the said torch also comprising an arc igniting device incorporating a spark gap fed by a source (27) of arc igniting pulses, the said spark gap, composed of an assembly of two spark gap electrodes (157, 163), being placed facing the welding or cutting electrode (152) and connected to the pulse source (27) by two conductors (164, 165, 14, 32 and 156, 155, 33, 31), characterised in that the said spark gap is arranged in a housing (158) which is its own, outside the space to be ionised at the level of the

EP 0 223 675 B1

welding or cutting electrode (152), and open in the direction of the end (162) of the latter and in that one of the said conductors (164, 165, 14, 32) connecting the spark gap to the pulse source is common over at least a part of its length to the cable (165, 14) feeding the welding current.

FIG.1

FIG.2

FIG.3

150

153

152

154

162

165

161

164

163 159 157 158 156 155 160

EP 0 223 675 B1